# EUROPEAN PATENT APPLICATION

(11) **EP 0 551 532 A1**
(43) Date of publication of application: **21.07.1993**
(21) Application number: 92100153.3
(22) Date of filing: 07.01.1992
(51) Int. Cl.: C08K 9/02, F01N 3/28, D21H 13/44, C08L 31/04

(54) **Heat-resistant expansive member**

(71) Applicant: NIPPON PILLAR PACKING CO. LTD., Osaka-shi Osaka-fu (JP)
(72) Inventor: Hashimoto, Akira, Sanda-shi, Hyogo-ken (JP); Miyoshi, Takeshi, Sanda-shi, Hyogo-ken (JP); Hoshi, Susumu, Sanda-shi, Hyogo-ken (JP)
(74) Representative: Fleuchaus, Leo, Dipl.-Ing.

(57) **Abstract**

The heat-resistant expansive member (2) in accordance with the present invention may be used, for example, as a holding member of a ceramic honeycomb monolithic catalyst forming a catalyst converter in a low pollution engine. In this connection, the present heat-resistant expansive member is arranged such that the negative expansion in a low temperature zone is decreased and that there is restrained a decrease in performance such as an increase in shrinkage factor, a decrease in expansion coefficient or the like, yet assuring tensile strength and resiliency so that the heat-resistant expansive member can be readily used as wound. The present heat-resistant expansive member comprises 45 to 70 % by weight of treated unexpanded vermiculite having a divalent cation group, 25 to 54.9 % by weight of an inorganic fiber material such as ceramic fibers, slag/rock fibers, silica fibers, a sepiolite mineral or the like, and 0.1 to 5 % by weight of an organic binder having a vinyl acetate group.

## Description

### Background of the Invention

### 1. Field of the Invention

The present invention relates to a heat-resistant expansive member adapted to be expanded so that the gap therearound is filled when heat is applied thereto, such as a refractory sealing material or a holding member of a ceramic honeycomb monolithic catalyst forming a catalyst converter in a low pollution engine capable of purifying the emission by oxidizing or reducing harmful components discharged from an automotive engine such as carbon monoxide, hydrocarbon and nitrogen oxides.

Because of its excellent high-temperature resistance, the heat-resistant expansive member of the type above-mentioned is generally used as mounted on a metallic casing or as wound on a ceramic honeycomb monolithic catalyst which is often used as a catalyst converter of a low-pollution engine. In view of such usage conditions, the heat-resistant expansive member is required not only to be heat-resistant, but also to assure a sufficient holding force in each of different temperature zones with no negative expansion due to a creep phenomenon in a low temperature zone. Further, the heat-resistant expansive member is required to have such cushioning properties as to prevent a ceramic catalyst from being damaged by a mechanical shock such as vibration or the like occurring during the vehicle's travel. Further, the heat-resistant expansive member is required to have such resiliency and tensile strength as to prevent the heat-resistant expansive member from being cracked even though bent as wound.

### 2. Description of the Prior Art

As the heat-resistant expansive member satisfying the requirements above-mentioned, there is known a heat-resistant expansive member, as disclosed in Japanese Patent Application No. 62-38397, which contains 30 to 75 % by weight of unexpanded vermiculite, 20 to 65 % by weight of an inorganic fiber material such as chrysotile asbestos, amphibole asbestos, soft glass fibers, crystalline alumina whisker, alminosilicate or the like, and 10 to 20 % by weight of an organic resilient binder such as natural rubber latex, styrene-butadiene latex, butadiene-acrylonitrile latex, an acrylate polymer or copolymer, a methacrylate polymer or copolymer, or the like.

Because of the use of the organic resilient binder, the conventional heat-resistant expansive member above-mentioned substantially satisfies the requirements above-mentioned as to decrease in negative expansion in a low temperature zone, improvements in heat resistance in a high temperature zone, cushioning properties for relaxing a mechanical shock such as vibration, and the like. However, this conventional heat-resistant expansive member lacks resiliency and is low in tensile strength in an ambient temperature zone. Thus, this heat-resistant expansive member is apt to be cracked when used as bent or wound. It is therefore difficult that the heat-resistant expansive member is used as simply wound or mounted. Further, the proportion of the organic resilient binder used for giving strength and resiliency to the heat-resistant expansive member is as much as 10 to 20 % by weight. Since the heat-resistant expansive member of the type above-mentioned is used at a temperature of not less than 300°C, the organic resilient binder is still liable to be thermally decomposed. Such thermal decomposition generates combustion gas and causes the heat-resistant expansive member to become thin. Thus, the heat-resistant expansive member is disadvantageously lowered in its original performance to fill the gap therearound.

### Summary of the Invention

In view of the foregoing, the present invention is proposed with the object of providing a heat-resistant expansive member in which the blending proportion of the organic binder is minimized, which can decrease negative expansion in a low temperature zone as required, and which is excellent in strength and resiliency.

It is another object of the present invention to provide a heat-resistant expansive member of which surface is so protected as to prevent the surface from coming off or falling down when the heat-resistant expansive member used.

It is a further object of the present invention to provide a heat-resistant expansive member further improved in resiliency and tensile strength at an ambient temperature.

To achieve the objects above-mentioned, the heat-resistant expansive member according to a first aspect of the present invention is composed of 45 to 70 % by weight of treated unexpanded vermiculite having a divalent cation group, 25 to 54.9 % by weight of an inorganic fiber material such as ceramic fibers, slag/rock fibers, silica fibers, a sepiolite mineral or the like, and 0.1 to 5 % by weight of an organic binder having a vinyl acetate group.

In the heat-resistant expansive member according to a second aspect of the present invention which is composed of 45 to 70 % by weight of treated unexpanded vermiculite having a divalent cation group, 25 to 54.9 % by weight of an inorganic fiber material and 0.1 to 5 % by weight of an organic binder, at least one surface thereof is coated with an organic soft film.

According to the first and second aspects of the present invention, it is preferable to use, as the treated unexpanded vermiculite having a divalent cation group, vermiculite treated with sodium ammonium hydrogen phosphate so that sodium ions Na⁺ and ammonium ions NH₄⁺ are jointly present therein.

In the first aspect of the present invention, it is preferable to use, as the organic binder having a vinyl acetate group, at least one selected from the group consisting of polyvinyl acetate, a vinyl acetate-ethylene copolymer, a vinyl acetate-ethylene-vinyl chloride copolymer, a vinyl acetate-acryl copolymer and a vinyl acetate-ethylene-acryl copolymer.

In the second aspect of the present invention, it is preferable to use, as the organic binder, one selected from the group consisting of an organic binder having a vinyl acetate group, a solid material obtained from a shythetic resin emulsion and a solid material obtained from rubber latex.

In the second aspect of the present invention, it is preferable to use, as the material of the organic soft film to be formed as coated, at least one selected from the group consisting of polyurethane, polyacrylate, natural rubber, a butadiene-styrene copolymer, a butadiene-acrylonitrile copolymer, a butadiene-styrene-vinylpyridine copolymer and synthetic resin having a vinyl acetate group.

In the heat-resistant expansive member according to a third aspect of the present invention which is composed of 45 to 70 % by weight of unexpanded vermiculite treated with sodium ammonium hydrogen phosphate, 25 to 54.9 % by weight of an inorganic fiber material and an organic binder and which has at least one surface coated with an organic soft coating film, the total sum of the organic binder and the organic soft coating film is in a range from 0.5 to 5 % by weight.

In the third aspect of the present invention, the organic binder is contained preferably in a range from 0.1 to 3.0 % by weight and the organic soft film is contained preferably in a range from 0.4 to 2.0 % by weight.

In the third aspect of the present invention, silica/alumina fibers may be used as the inorganic fiber material, a vinyl acetate-ethylene copolymer may be used as the organic binder and an ethylene-type copolymer or silicon may be used as the organic soft film.

According to the first aspect of the present invention, the organic binder having a vinyl acetate group is used so that the blending proportion of the organic binder can be reduced to 0.1 to 5 % by weight. This not only reduces the negative expansion in a low temperature zone, but also minimizes, throughout the low and high temperature zones, the occurrence of combustion gas due to thermal decomposition of the inorganic binder and subsequent decrease in performance such as increase in shrinkage factor and decrease in expansion force. Further, the heat-resistant expansive member is provided with sufficient tensile strength and resiliency, thereby to restrain the heat-resistant expansive member from being cracked or broken when bent. Thus, the heat-resistant expansive member can be readily used as wound or mounted.

According to the second and third aspects of the present invention, the heat-resistant expansive member is coated, at least one surface thereof, with an organic soft film. Thus, the surface of the heat-resistant expansive member is protected to prevent the surface from coming off and falling down when the member is used. Accordingly, the performance of the heat-resistant expansive member can be maintained in a satisfactory manner for a long period of time.

When there is used an organic soft film containing an ethylene-type copolymer excellent in elongation, adhesive properties and weather resistance, the resultant member is further improved in tensile strength and resiliency at an ambient temperature.

In the heat-resistant expansive member according to the third aspect of the present invention which is coated at least one surface thereof with an organic soft film, the total sum of the organic binder and the organic soft film is in a range from 0.5 to 5 % by weight. This not only assures a good protection of the member surface, but also restrains the occurrence of combustion gas due to thermal decomposition of the organic binder and the organic soft coating film when the heat-resistant expansive member is used in a high temperature zone.

Other features and effects of the present invention will be apparent from the following description with reference to the attached drawings showing embodiments thereof.

### Brief Description of the Drawings

Figure 1 is a schematic section view of an example of a catalyst converter to which the heat-resistant expansive member in accordance with the present invention is applied;
Figure 2 is a section view of a heat-resistant expansive member of Example 2 of the present invention;
Figure 3 is a table showing results of winding tests conducted with the use of a rod having a diameter of 50 mm, and tensile strength values of the heat-resistant expansive members of Examples 1, 2 and Comparative Examples 1, 2;
Figure 4 is a schematic section view of a heat expansion force measuring device;
Figure 5 is a graph showing coefficients of thermal expansion of the heat-resistant expansive member of Example 2 and Comparative Examples 3, 4; and
Figure 6 is a table showing the maximum shrinkage factors, temperatures at which the shrinkage factors are returned to 0%, and coefficients of thermal expansion at 750°C of the heat-resistant expansive member of Example 2 and Comparative Examples 3, 4.

### Detailed Description of the Prefered Embodiments

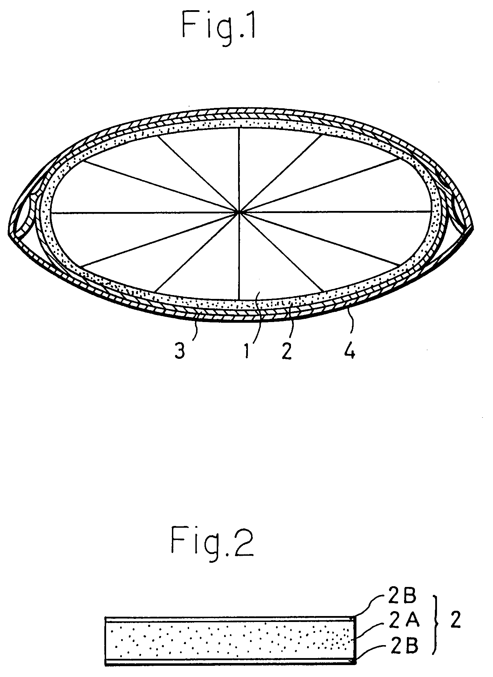

Fig. 1 is a schematic section view of an example of a catalyst converter to which the heat-resistant expansive member of the present invention is applied. In Fig. 1, a ceramic honeycomb monolithic catalyst 1 is surrounded at the outer periphery thereof by a heat-resistant expansive member 2 and mounated on a two-half metallic casing 3. A metallic band 4 fastens the outer periphery of the casing 3.

As shown in Fig. 2, the heat-resistant expansive sheet 2 has a heat-resistant expansive member 2A which is produced by a beater seating method and which contains: 25 to 54.9 % by weight, preferably 34 % by weight, of an inorganic fiber material such as ceramic fibers (silica/alumina fibers, alumina fibers or the like), slag/rock fibers, silica fibers, boron fibers, potassium titanate fibers, silicon carbide fibers, stainless-type metallic fibers, fibers of a sepiolite mineral such as sepiolite, zonotlite or the like; 45 to 70 % by weight, preferably 62 % by weight, of treated unexpanded vermiculite having a divalent cation group; and 0.1 to 5 % by weight, preferably 4 % by weight, of an organic binder having a vinyl acetate group. The heat-resistant expansive member 2A is coated, at both obverse and reverse sides thereof, with organic soft films 2B. In this embodiment, the organic binder and the organic soft films 2B are used in amounts such that the total sum of the organic binder and the organic soft films 2B is in a range from 0.5 to 5 % by weight and the organic binder is used preferably in a range from 0.1 to 3.0 % by weight, while the organic soft films are used preferably in a range from 0.4 to 2.0 % by weight.

The two-half metallic casing 3 and the metallic band 4 are made of SUS 304.

The sepiolite mineral which is an example of the inorganic fiber material forming the heat-resistant expansive sheet 2, is available in two types depending on the degree of crystallization. That is, the fibrous type with high degree of crystallization is called α-sepiolite, while the powder type with low degree of crystallization or amorphous state is called β-sepiolite. Of these, the α-sepiolite is preferable in view of interlocking performance with ceramic fibers or treated unexpanded vermiculite. The inorganic fiber material not only improves the heat resistance, but also prevents a nagative expansion around 300°C. The inorganic fiber material serves as a binder to improve the shape retention of the sheet particularly in a high temperature zone where the organic binder disappears. Ceramic fibers such as silica/alumina fibers, alumina fibers or the like are more preferable.

The treated unexpanded vermiculite having a divalent cation group is obtained by treating untreated unexpanded vermiculite with an aqueous solution of sodium ammonium hydrogen phosphate, so that sodium ions Na⁺ and ammonium ions NH₄⁺ co-exist to increase the expansion amount and expansion force of the vermiculite.

As the organic binder having a vinyl acetate group, there is used at least one selected from the group consisting of polyvinyl acetate, a vinyl acetate-ethylene copolymer, a vinyl acetate-ethylene-vinyl chloride copolymer, a vinyl acetate-acryl copolymer and a vinyl acetate-ethylene-acryl copolymer. Preferably, the vinyl acetate-ethylene-vinyl chloride copolymer (for example, SUMIKAFLEX 900 manufactured by Sumitomo Kagaku Co., Ltd.) may be used in an amount as low as 0.1 to 5 % by weight. In this case, it is possible to restrain combustion gas from being generated due to thermal decomposition when the heat-resistant expansive sheet 2 is used at a high temperature zone of 300°C or more, thus restraining a subsequent decrease in performance.

In addition to the organic binder having a vinyl acetate group, there may be used an organic binder selected from the group consisting of (i) a solid material obtained from an emulsion of synthetic resin such as a polyacrylate, an acryl-styrene copolymer, polyvinyl chloride, polystyrene or polyester, and (ii) a solid material obtained from rubber latex such as natural rubber, polybutadiene, SBR, NBR or MBR. Further, there may be used organic fibers such as bast fibers, venous fibers, PVA fibers, polyethylene pulp, micro-fibrillated cellulose or the like.

As the material of the organic soft coating films 2B formed on both obverse and reverse sides of the heat-resistant expansive member 2A, there is used at least one selected from the group consisting of polyurethane, polyacrylate, natural rubber, a butadiene-styrene copolymer, a butadiene-acrylonitrile copolymer, a butadiene-styrene-vinylpyridine copolymer and synthetic resin having a vinyl acetate group. Preferably, the vinyl acetate-ethylene-acryl copolymer (for example, SUMIXAFLEX 900 manufactured by Sumitomo Kagaku Co., Ltd.) may be used in an amount of 1.5 % by weight and its liquidous emulsion is applied to the obverse and reverse sides of the member 2A in a thickness of 50 µm, which are then dried. When such organic soft coating films 2B are formed, the heat-resistant expansive sheet 2 is improved in elongation, adhesive properties and weather resistance. Further, the heat-resistant expansive sheet 2 is improved not only in resiliency and tensile strength at a room temperature, but also in surface protection. The function of surface protection effectively prevents the heat-resistant expansive member 2A from coming off or falling down at the time of handling.

The following description will further discuss tests conducted by the inventors.

As Example 1 of the present invention, there was produced, by a beater seating method, a heat-resistant expansive member in the form of a sheet having a thickness of 4.9 mm and density of 0.8 g/cm³ by blending 62 % by weight of treated unexpanded vermiculite No. 0 from South Africa, 34 % by weight of ceramic fibers (SC1260D2 manufactured by Shinnikka Co., Ltd.) and 4 % by weight of an emulsion of a vinyl acetate-ethylene-acrylate copolymer (SUMIKAFLEX 900 manufactured by Sumitomo Kagaku Co., Ltd.) as the organic binder.

As Example 2 of the present invention, there was produced, by a beater seating method, a heat-resistant expansive member in the form of a sheet having a thickness of 4.9 mm and density of 0.8 g/cm³ by blending 62 % by weight of treated expanded vermiculite No. 0 from South Africa, 34 % by weight of ceramic fibers (SC1260D2 manufactured by Shinnikka Co., Ltd.) and 4 % by weight of an emulsion of a vinyl acetate-ethylene-acrylate copolymer (SUMIKAFLEX 900 manufactured by Sumitomo Kagaku Co., Ltd.) as an organic binder. A liquidous emulsion containing 1.5 % by weight of an ethylene-vinyl acetate-acrylate copolymer (SUMIKAFLEX 900 manufactured by Sumitomo Kagaku Co., Ltd.) for the total amount of the sheet-like heat-resistant expansive member thus prepared, was applied, in a thickness of 50 µm, to each of the obverse and reverse sides of the sheet-like heat-resistant expansive member, which were then dried to form coating layers of organic soft coating films 2B.

As Comparative Example 1, there was prepared, by a beater seating method, a sheet-like heat-resistant expansive member having a thickness of 4.9 mm and density of 0.8 g/cm³ by blending 62 % by weight of treated unexpanded vermiculite, 34 % by weight of ceramic fibers (SC1260D2 manufactured by Shinnikka Co., Ltd.) and 4 % by weight of NBR latex as the organic binder.

As Comparative Example 2, there was prepared, by a beater seating method, a sheet-like heat-resistant expansive member having a thickness of 4.9 mm and density of 0.8 g/cm³ by blending 60 % by weight of treated unexpanded vermiculite, 33 % by weight of ceramic fibers (SC1260D2 manufactured by Shinnikka Co., Ltd.) and 7 % by weight of NBR latex as the organic binder.

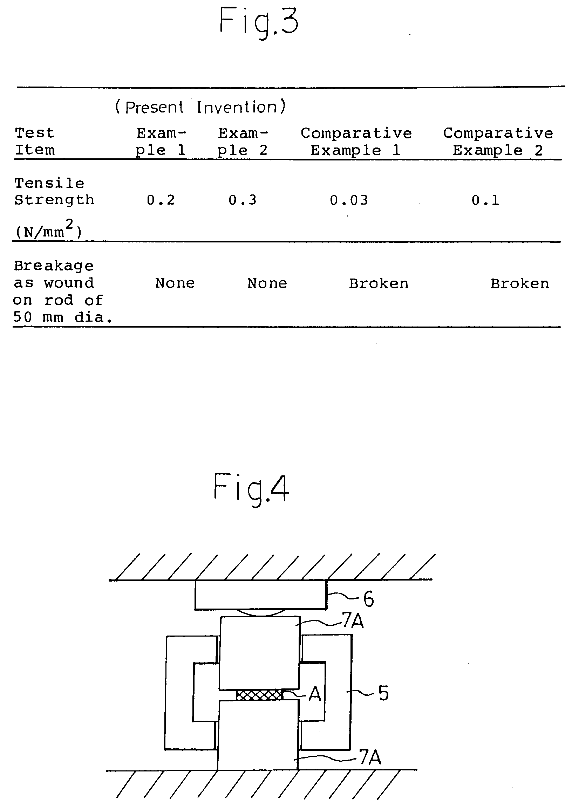

A tensile strength test and a test of winding on a rod having a diameter of 50 mm were conducted on Examples 1, 2 and Comparative Examples 1, 2. The results are shown in Fig. 3.

As apparent from Fig. 3, Examples 1, 2 are increased in tensile strength to about 7 to 10 times as compared with Comparative Example 1, i.e., a conventional heat-resistant expansive member, and to about 2 to 3 times as compared with Comparative Example 2. As also apparent from Fig. 3, Examples 1, 2 present no breakage when wound on the rod having a diameter of 50 mm. It is therefore possible to use Examples 1, 2 in an optional form as freely bent or wound on a catalyst for example. Further, when there were formed coating layers of organic soft coating films 2B, the surface of the heat-resistant expansive member was protected, thus effectively preventing the surface from coming off or falling down in handling.

As Comparative Example 3, there was prepared, by a beater seating method, a sheet-like heat-resistant expansive member having a thickness of 4.9 mm and density of 0.8 g/cm³ by blending 4 % by weight of α-sepiolite (MILCON MS-2-2 manufactured by Showa Kogyo Co., Ltd.), 54 % by weight of treated unexpanded vermiculite No. 0 from South Africa, 30 % by weight of ceramic fibers (SC1260D2 manufactured by Shinnikka Co., Ltd.) and 12 % by weight of an emulsion of a vinyl acetate-ethylene-acrylate copolymer (SUMIKAFLEX 900 manufactured by Sumitomo Kagaku Co., Ltd.) as the organic binder.

As Comparative Example 4, there was prepared, by a beater seating method, a sheet-like heat-resistant expansive member having a thickness of 4.9 mm and density of 0.65 g/cm³ by blending 57 % by weight of vermiculite treated with an ammonium ion (NH₄⁺), 35 % by weight of ceramic fibers and 8.0 % by weight of NBR latex as the organic binder.

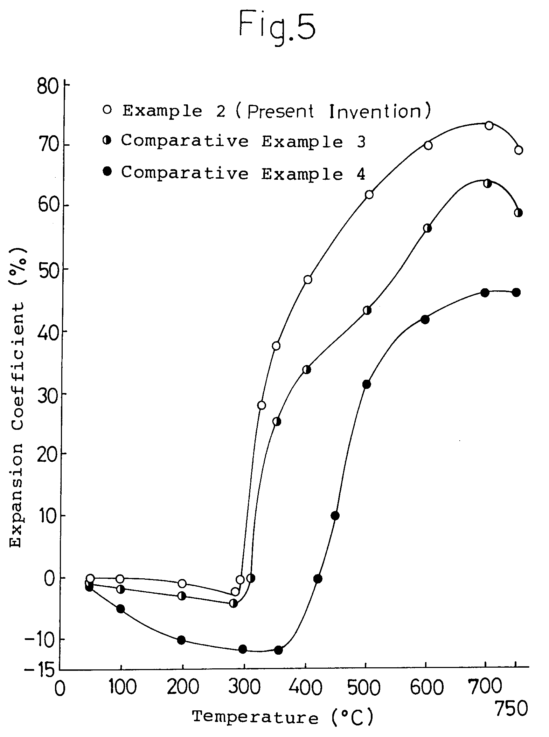

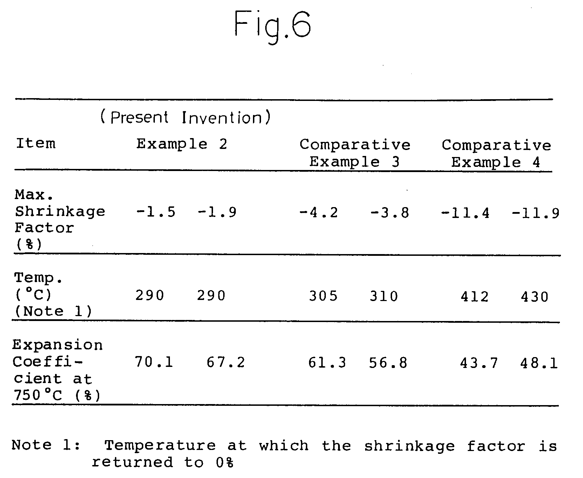

From the sheet-like heat-resistant expansive members of Example 2 and Comparative Examples 3, 4, there were respectively prepared samples A each having a diameter of 15 mm and a thickness of 4.9 mm. As shown in Fig. 4, each of the samples was so compressed as to have a thickness of 3 mm with the use of quartz rods 7A and a load cell 6 in a heating furnace 5. There were measured coefficients of thermal expansion during which the samples were increased in temperature to 750°C for about 50 minutes. Such measurements were made twice for each sample, and the averages are shown in Fig. 5. Fig. 6 shows, out of the measurement results, values on which particular attention should be placed.

As apparent from the measurement results in Figs. 5, 6, Example 2 is remarkably improved in negative expansion characteristics as compared with Comparative Examples 3, 4 in that Example 2 presents a maximum negative expansion at 270°C and a maximum shrinkage factor (maximum negative expansion coefficient) of -1.5 to -1.9. Further, Example 2 stops negatively expanding at a temperature as low as 290°C. Further, Example 2 is improved in expansion coefficient at 750°C by about 16% as comapred with Comparative Example 3 and by about 50% as compared with Comparative Example 4.

From the test results above-mentioned, it is found that the heat-resistant expansive member of the present invention presents a small negative expansion, stops negatively expanding at a low temperature and is greatly increased in expansion with the increase in temperature, thus remarkably improving properties of holding the ceramic honeycomb monolithic catalyst in each of the temperature zones.

## Claims

1. A heat-resistant expansive member comprising 45 to 70 % by weight of treated unexpanded vermiculite having a divalent cation group, 25 to 54.9 % by weight of an inorganic fiber material such as ceramic fibers, slag/rock fibers, silica fibers, a sepiolite mineral or the like, and 0.1 to 5 % by weight of an organic binder having a vinyl acetate group.

2. A heat-resistant expansive member comprising 45 to 70 % by weight of treated unexpanded vermiculite having a divalent cation group, 25 to 54.9 % by weight of an inorganic fiber material and 0.1 to 5 % by weight of an organic binder, said heat-resistant expansive member having at least one surface coated with an organic soft coating film.

3. A heat-resistant expansive member according to Claim 1, wherein the treated unexpanded vermiculite having a divalent cation group is vermiculite which is treated with sodium ammonium hydrogen phosphate so that sodium ions Na⁺ and ammonium ions NH₄⁺ coexist in said vermiculite.

4. A heat-resistant expansive member according to Claim 2, wherein the treated unexpanded vermiculite having a divalent cation group is vermiculite which is treated with sodium ammonium hydrogen phosphate so that sodium ions Na⁺ and ammonium ions NH₄⁺ coexist in said vermiculite.

5. A heat-resistant expansive member according to Claim 1, wherein the organic binder having a vinyl acetate is at least one selected from the group consisting of polyvinyl acetate, a vinyl acetate-ethylene copolymer, a vinyl acetate-ethylene-vinyl chloride copolymer, a vinyl acetate-acryl copolymer and a vinyl acetate-ethylene-acryl copolymer.

6. A heat-resistant expansive member according to Claim 2, wherein the organic binder is at least one selected from the group consisting of an organic binder having a vinyl acetate group, a solid material obtained from a synthetic resin emulsion and a solid material obtained from rubber latex.

7. A heat-resistant expansive member according to Claim 2, wherein the material of the organic soft film is at least one selected from the group consisting of polyurethane, polyacrylate, natural rubber, a butadiene-styrene copolymer, a butadiene-acrylonitrile copolymer, a butadiene-styrene-vinylpyridine copolymer and synthetic resin having a vinyl acetate group.

8. A heat-resistant expansive member according to Claim 6, wherein the material of the organic soft film is at least one selected from the group consisting of polyurethane, polyacrylate, natural rubber, a butadiene-styrene copolymer, a butadiene-acrylonitrile copolymer, a butadiene-styrene-vinylpyridine copolymer and synthetic resin having a vinyl acetate group.

9. A heat-resistant expansive member comprising 45 to 70 % by weight of unexpanded vermiculite treated with sodium ammonium hydrogen phosphate, 25 to 54.9 % by weight of an inorganic fiber material and an organic binder,
said heat-resistant expansive member having at least one surface coated with an organic soft coating film,
the total sum of said organic binder and said organic soft coating film being in a range from 0.5 to 5 % by weight.

10. A heat-resistant expansive member according to Claim 9, wherein the organic binder is contained in an amount of 0.1 to 3.0 % by weight and the organic soft coating film is contained in an amount of 0.4 to 2.0 % by weight.

11. A heat-resistant expansive member according to Claim 9, wherein the inorganic fiber material is silica/alumina fibers, the organic binder is a vinyl acetate-ethylene copolymer and the organic soft coating film is an ethylene-type copolymer or silicon.

12. A heat-resistant expansive member according to Claim 10, wherein the inorganic fiber material is silica/alumina fibers, the organic binder is a vinyl acetate-ethylene copolymer and the organic soft coating film is an ethylene-type copolymer or silicon.
